# EUROPÄISCHE PATENTSCHRIFT

(11) **EP 3 812 850 B1**
(45) Veröffentlichungstag und Bekanntmachung des Hinweises auf die Patenterteilung: **29.11.2023**
(21) Anmeldenummer: 20200018.8
(22) Anmeldetag: 05.10.2020
(51) Int. Cl.: G05B 13/02, G05B 23/02

(54) **VERFAHREN ZUR ERZEUGUNG EINES NEURONALEN NETZES FÜR EIN FELDGERÄT ZUR VORHERSAGE VON FELDGERÄTFEHLERN UND EIN ENTSPRECHENDES SYSTEM**
METHOD FOR GENERATING A NEURAL NETWORK FOR A FIELD DEVICE FOR PREDICTING FIELD DEVICE FAULTS AND A CORRESPONDING SYSTEM
PROCÉDÉ DE GÉNÉRATION D'UN RÉSEAU DES NEURONES POUR UN APPAREIL DE TERRAIN PERMETTANT DE PRÉVOIR DES DÉFAUTS DES APPAREILS DE TERRAIN ET SYSTÈME CORRESPONDANT

(30) Priorität: 24.10.2019 DE 102019128715
(43) Veröffentlichungstag der Anmeldung: 28.04.2021
(73) Patentinhaber: Krohne Messtechnik GmbH, 47058 Duisburg (DE)
(72) Erfinder: Kilimann, Christoph, 46286 Dorsten (DE); Ristow, Daniel, 47167 Duisburg (DE); Hottgenroth, Wolfgang, 45259 Essen (DE)
(74) Vertreter: Gesthuysen Patentanwälte

(56) Entgegenhaltungen:
- EP-A1- 3 340 129
- DE-A1-102005 001 428
- DE-A1-102008 036 968
- VINICIUS MACHADO ET AL: "A Neural Network Multiagent Architecture Applied to Industrial Networks for Dynamic Allocation of Control Strategies Using Standard Function Blocks", IEEE TRANSACTIONS ON INDUSTRIAL ELECTRONICS, IEEE SERVICE CENTER, PISCATAWAY, NJ, USA, Bd. 57, Nr. 5, 1. Mai 2010 (2010-05-01), Seiten 1823-1834, XP011295556, ISSN: 0278-0046

## Beschreibung

Die Erfindung betrifft ein System mit einem Feldgerät, einem Computer und einem Kommunikationskanal zur Übertragung von Daten zwischen dem Feldgerät und dem Computer. In diesem System sind das Feldgerät und der Computer zur Kommunikation miteinander ausgebildet und verbunden.

Feldgeräte sind elektrische Geräte, die in industriellen Anlagen zur Automatisierung von Prozessen eingesetzt werden. Sie weisen Sensoren zur Messung und/oder Aktoren zur Beeinflussung von Prozessgrößen auf.

Zumeist sind mehrere Feldgeräte auf der einen Seite und eine Anlagensteuerung auf der anderen Seite einer industriellen Anlage über einen Feldbus miteinander verbunden. Zum einen steuert die Anlagensteuerung die Feldgeräte über den Feldbus und zum anderen werden Daten über den Feldbus zwischen den Feldgeräten und der Anlagensteuerung übertragen.

Ein Feldgerät weist einen Feldgerätcomputer zur Ausführung von neuronalen Netzen bis zu einer Maximalkomplexität auf. Für gewöhnlich übernimmt der Feldgerätcomputer auch die Steuerung des Feldgeräts und die Kommunikation mit einer Anlagensteuerung. Mit neuronalen Netzen sind künstliche neuronale Netze gemeint. Die Komplexität eines neuronalen Netzes ist insbesondere durch die Anzahl seiner Neuronen, die Anzahl seiner Schichten und seine Topologie bestimmt. Der Feldgerätcomputer eines Feldgeräts weist eine bestimmte Leistungsfähigkeit auf, weshalb er nur zur Ausführung von neuronalen Netzen bis zu zu einer Maximalkomplexität geeignet ist.

Ein Feldgerät führt in einem Feldgerätnormalbetrieb eine Funktion zum Beispiel in einer industriellen Anlage aus, für welche es ausgebildet und eingerichtet ist. Wenn das Feldgerät im Feldgerätnormalbetrieb arbeitet, liegt kein Feldgerätfehler vor. Das Feldgerät ist ausgebildet, Feldgerätfehler zu erkennen. Das Dokument: VINICIUS MACHADO ET AL: "A Neural Network Multiagent Architecture Applied to Industrial Networks for Dynamic Allocation of Control Strategies Using Standard Function Blocks",IEEE TRANSACTIONS ON INDUSTRIAL ELECTRONICS, IEEE SERVICE CENTER, PISCATAWAY, NJ, USA, Bd. 57, Nr. 5, 1. Mai 2010 (2010-05-01), Seiten 1823-1834, XP011295556, offenbart: Ein Verfahren zur Erzeugung eines neuronalen Netzes für ein Feldgerät zur Vorhersage von Feldgerätfehlern,

Das Problem bei der Erkennung von einem Feldgerätfehler ist, dass er bereits eingetreten ist und somit den Feldgerätnormalbetrieb des Feldgeräts und oftmals auch einen Normalbetrieb einer industriellen Anlage, zu welcher das Feldgerät gehört, beeinträchtigt. Ein neuronales Netz kann durch Training zur Vorhersage von Feldgerätfehlern ausgebildet werden. Jedoch übersteigt die Komplexität eines dafür unmittelbar geeigneten neuronalen Netzes die Maximalkomplexität, die von einem Feldgerät ausführbar ist. Ein Training eines neuronalen Netzes, dessen Komplexität die Maximalkomplexität nicht übersteigt, führt für gewöhnlich nicht zur Ausbildung des neuronalen Netzes, welches Feldgerätfehler erkennt. Folglich sind im Stand der Technik keine neuronalen Netze bekannt, welche zur Vorhersage von Feldgerätfehlern ausgebildet und auch von einem Feldgerät ausführbar und/oder trainierbar sind.

Aus dem beschriebenen Problem leitet sich die Aufgabe der vorliegenden Erfindung her, zum einen ein Verfahren zur Erzeugung eines neuronalen Netzes zur Vorhersage von Feldgerätfehlern anzugeben, welches vom Feldgerätcomputer eines Feldgeräts ausführbar ist, und zum anderen ein System zur Umsetzung des Verfahrens anzugeben.

Die Aufgabe ist zum einen durch ein System mit den Merkmalen von Patentanspruch 1 gelöst.

Und zwar wird in einem Verfahrensschritt zunächst ein Neuronen aufweisendes neuronales Netz zur Vorhersage von Feldgerätfehlern mit einer Anfangskomplexität größer als die Maximalkomplexität erzeugt. Eine Eignung des neuronalen Netzes zur Vorhersage von Feldgerätfehlern ergibt sich durch seine Anzahl an Neuronen, seine Anzahl an Schichten und seine Topologie.

In einem weiteren Verfahrensschritt werden dann Trainingsdaten aus Daten über Feldgerätfehler erzeugt. Die Daten eines Feldgerätfehlers umfassen Daten sowohl vor als auch nach dem Eintreten des Feldgerätfehlers.

In einem weiteren Verfahrensschritt wird das neuronale Netz mit den Trainingsdaten trainiert, sodass es nach dem Training zur Vorhersage von Feldgerätfehlern ausgebildet ist. Durch das Training mit den Trainingsdaten lernt das neuronale Netz, bis es schließlich zur Vorhersage von Feldgerätfehlern ausgebildet ist. Demnach wird ein für die Vorhersage von Feldgerätfehlern geeignetes neuronales Netz durch Training dazu ausgebildet.

In einem weiteren Verfahrensschritt wird die Anfangskomplexität zumindest bis auf die Maximalkomplexität reduziert. Die Reduktion erfolgt, indem in mindestens einem Reduktionsschritt zunächst mindestens ein Neuron aus dem neuronalen Netz entfernt und dann das reduzierte neuronale Netz erneut trainiert wird, sodass es nach dem Training zur Vorhersage von Feldgerätfehlern ausgebildet ist. Beim Training des reduzierten neuronalen Netzes stellt sich heraus, dass es durch das Entfernen des mindestens einen Neurons seine Ausbildung zur Vorhersage von Feldgerätfehlern entweder behalten oder eingebüßt hat. Wenn es die Ausbildung behalten hat, wird das Training beendet. Wenn es die Ausbildung eingebüßt hat, wird das Training fortgeführt, bis es die Ausbildung wieder erreicht hat. Wenn die Komplexität des neuronalen Netzes nach dem Reduktionsschritt die Maximalkomplexität noch übersteigt, werden weitere Reduktionsschritte ausgeführt, bis die Komplexität die Maximalkomplexität nicht mehr übersteigt.

Durch die beschriebene Reduktion der Anfangskomplexität des neuronalen Netzes zumindest bis auf die Maximalkomplexität ist es nun vom Feldgerätcomputer eines Feldgeräts ausführbar. Ein Training eines neuronalen Netzes mit einer Anfangskomplexität, welche lediglich der Maximalkomplexität entspricht, mit den Trainingsdaten führt für gewöhnlich nicht dazu, dass es zur Vorhersage von Feldgerätfehlern ausgebildet wird. Ein neuronales Netz mit der Maximalkomplexität und der Ausbildung zur Vorhersage von Feldgerätfehlern kann demnach für gewöhnlich nicht direkt aus einem neuronalen Netz mit einer Anfangskomplexität erzeugt werden, welche höchstens der Maximalkomplexität entspricht, sondern muss aus einem neuronalen Netz mit einer Anfangskomplexität erzeugt werden, welche größer ist als die Maximalkomplexität.

Nach einer Übertragung des reduzierten neuronalen Netzes auf den Feldgerätcomputer eines Feldgeräts ist das Feldgerät ausgebildet, im Feldgerätnormalbetrieb Feldgerätfehler vor deren Eintreten vorherzusagen. Für gewöhnlich wird ein vorhergesagter Feldgerätfehler von dem Feldgerät an eine Anlagensteuerung gemeldet. Somit ist es nun möglich, Maßnahmen zu ergreifen, die das Eintreten des Feldgerätfehlers oder jedenfalls eine Beeinträchtigung durch den Feldgerätfehler verhindern oder zumindest abmildern.

Die Anfangskomplexität des neuronalen Netzes wird zumindest auf die Maximalkomplexität reduziert, welche von dem Feldgerätcomputer ausführbar ist. Bei einem weiteren Reduktionsschritt wird eine Komplexität des neuronalen Netzes erreicht, bei welcher ein erneutes Training nicht mehr zur Ausbildung des neuronalen Netzes zur Vorhersage von Feldgerätfehlern führt. Deshalb ist in einer Ausgestaltung des Verfahrens vorgesehen, dass der letzte Reduktionsschritt rückgängig gemacht wird, wenn das erneute Training des neuronalen Netzes während des letzten Reduktionsschritts dieses nicht mehr zur Vorhersage von Feldgerätfehlern ausgebildet hat.

Die Trainingsdaten werden zumindest aus Daten über Feldgerätfehler erzeugt. In einer weiteren Ausgestaltung des Verfahrens ist vorgesehen, dass die Trainingsdaten zusätzlich auch aus Daten über Feldgerätnormalbetrieb erzeugt werden. Daten über Feldgerätnormalbetrieb umfassen insbesondere auch Messdaten, welche von einem Feldgerät im Normalbetrieb anfallen. Somit umfassen die Trainingsdaten sowohl Daten über Feldgerätfehler als auch über Feldgerätnormalbetrieb. Das Training des neuronalen Netzes mit diesen Trainingsdaten führt zu einer verbesserten Ausbildung zur Vorhersage von Feldgerätfehlern.

Zur Beurteilung des Erfolgs des Trainings des neuronalen Netzes ist in einer weiteren Ausgestaltung vorgesehen, dass die Trainingsdaten zunächst in Lerndaten und in Testdaten aufgeteilt werden und dass dann das neuronale Netz trainiert wird, indem es mit den Lerndaten unterrichtet und mit den Testdaten getestet wird. Die Beurteilung des Erfolgs des Trainings wird auf Grundlage der Ergebnisse des Tests mit den Testdaten ausgeführt. Wenn die Beurteilung ergibt, dass das neuronale Netz zur Vorhersage von Feldgerätfehlern ausgebildet ist, wird das Training beendet. Wenn Sie jedoch ergibt, dass die Ausbildung des neuronalen Netzes noch nicht ausreichend ist, wird das Training entsprechend den Ergebnissen des Tests angepasst und fortgeführt.

Die Trainingsdaten werden jedenfalls aus Daten über Feldgerätfehler und vorzugsweise auch aus Daten über Feldgerätnormalbetrieb erzeugt. In einer weiteren Ausgestaltung ist vorgesehen, dass diese Daten von mindestens einem Feldgerät erhoben werden. Vorzugsweise werden die Daten von einer Vielzahl von Feldgeräten erhoben, sodass eine große Anzahl von Daten zur Verfügung steht. Das Erheben der Daten wird also von dem Feldgerät bzw. den Feldgeräten selbst durchgeführt. Durch eine große Anzahl von Daten wird die Ausbildung des neuronalen Netzes zur Vorhersage von Feldgerätfehlern verbessert.

In einer Weiterbildung der vorstehenden Ausgestaltung ist vorgesehen, dass ein Feldgerätfehler im mindestens einen Feldgerät von diesem selbst erkannt wird und ausgelöst durch den Feldgerätfehler Daten über den Feldgerätfehler erhoben werden. Auch aus diesen Daten werden dann Trainingsdaten erzeugt. Von dem mindestens einen Feldgerät wird also nicht nur ein Feldgerätfehler erkannt, sondern auch Daten über den Feldgerätfehler erzeugt.

Das System weist, wie bereist ausgeführt worden ist, ein Feldgerät, einen Computer und einen Kommunikationskanal auf.

Der Computer ist dabei ausgebildet, Trainingsdaten aus Daten über Feldgerätfehler zu erzeugen. Weiter ist er ausgebildet, das neuronale Netz mit den Trainingsdaten zu trainieren, sodass es nach dem Training zur Vorhersage von Feldgerätfehlern ausgebildet ist. Darüber hinaus ist er ausgebildet, die Anfangskomplexität zumindest bis auf die Maximalkomplexität zu reduzieren, indem in mindestens einem Reduktionsschritt zunächst mindestens ein Neuron aus dem neuronalen Netz entfernt und dann das reduzierte neuronale Netz erneut trainiert wird, sodass es nach dem Training zur Vorhersage von Feldgerätfehlern ausgebildet ist.

Der Computer ist zum Beispiel Teil einer Anlagensteuerung einer industriellen Anlage, zu welcher auch das Feldgerät gehört. Wenn das Feldgerät und die Anlagensteuerung, also auch der Computer, über einen Feldbus zum Austausch von Daten ausgebildet sind, dann bietet sich auch eine Implementierung des Kommunikationskanals über den Feldbus an. Zumeist sind mehrere Feldgeräte auf der einen Seite und eine Anlagensteuerung auf der anderen Seite einer industriellen Anlage über einen Feldbus miteinander verbunden. Zum einen steuert die Anlagensteuerung die Feldgeräte über den Feldbus und zum anderen werden Daten über den Feldbus zwischen den Feldgeräten und der Steuerung übertragen.

Im Betrieb führt der Computer ein Verfahren aus, welches der oben beschriebenen Ausbildung des Computers entspricht. In einer Ausgestaltung des Systems ist vorgesehen, dass der Computer zusätzlich zum Ausführen eines der zuvor beschriebenen Verfahren ausgebildet ist.

In einer weiteren Ausgestaltung des Systems ist vorgesehen, dass das Feldgerät ausgebildet ist, mindestens einen Feldgerätfehler in diesem zu erkennen und ausgelöst durch diesen, Daten über den Feldgerätfehler zu erheben. Vorzugsweise werden die Daten von einer Vielzahl von Feldgeräten erhoben, sodass eine große Anzahl von Daten zur Verfügung steht. Durch eine große Anzahl von Daten wird die Ausbildung des neuronalen Netzes zur Vorhersage von Feldgerätfehlern verbessert.

Das Feldgerät ist ausgebildet, wtr auch Daten über den Feldgerätnormalbetrieb zu erheben. Daten über Feldgerätnormalbetrieb umfassen insbesondere auch Messdaten, welche von dem Feldgerät im Normalbetrieb anfallen. Somit umfassen die Trainingsdaten sowohl Daten über Feldgerätfehler als auch über Feldgerätnormalbetrieb.

Das Feldgerät weist zumindest einen zusätzlichen Sensor zur Erkennung von Feldgerätfehlern auf und dieser ausgebildet ist, zu den Daten beizutragen. Bei diesem Sensor handelt es sich zum Beispiel um einen Beschleunigungssensor oder einen Temperatursensor. Der Beschleunigungssensor ist zum Beispiel auf einer Platine des Feldgerätcomputers angeordnet und liefert Beschleunigungsdaten über Vibrationen, die auf die Platine einwirken. Beschleunigungsdaten, die ab einem Zeitpunkt angestiegene Vibrationen zeigen und ein Feldgerätfehler in Form eines Ausfalls kurz nach diesem Zeitpunkt trainieren das neuronale Netz dahin gehend, dass angestiegene Vibrationen den Ausfall des Feldgeräts zur Folge haben. Der Temperatursensor ist zum Beispiel auf einem Prozessor des Feldgerätcomputers angeordnet und liefert Temperaturdaten über eine Temperatur des Prozessors. Temperaturdaten, die ab einem Zeitpunkt angestiegene Temperaturen zeigen und ein Feldgerätfehler in Form eines Defekts des Prozessors kurz nach diesem Zeitpunkt trainieren das neuronale Netz dahin gehend, dass angestiegene Temperaturen des Prozessors den Defekt des Prozessors zur Folge haben.

In einer weiteren Ausgestaltung ist vorgesehen, dass das Feldgerät und der Computer ausgebildet sind, die Daten über den Kommunikationskanal vom Feldgerät zum Computer zu übertragen und/oder ausgebildet sind, das reduzierte neuronale Netz vom Computer zum Feldgerät zu übertragen.

In einer weiteren Ausgestaltung ist vorgesehen, dass das System mindestens ein weiteres Feldgerät aufweist, wobei das mindestens eine weitere Feldgerät vergleichbar oder entsprechend dem Feldgerät ausgebildet ist. Vorzugsweise werden die Daten von einer Vielzahl von Feldgeräten erhoben, sodass eine große Anzahl von Daten zur Verfügung steht. Durch eine große Anzahl von Daten wird die Ausbildung des neuronalen Netzes zur Vorhersage von Feldgerätfehlern verbessert.

In einer weiteren Ausgestaltung ist vorgesehen, dass der Computer als Cloud ausgebildet ist. Zum Beispiel ist die Cloud außerhalb der industriellen Anlage angeordnet, in welcher das mindestens eine Feldgerät und eine Anlagensteuerung zur Steuerung des mindestens einen Feldgeräts angeordnet sind.

Im Übrigen gelten in Bezug auf das System die Ausführungen zum Verfahren entsprechend und umgekehrt.

Im Einzelnen ist eine Vielzahl von Möglichkeiten gegeben, das Verfahren und das System auszugestalten und weiterzubilden. Dazu wird verwiesen sowohl auf die den unabhängigen Patentansprüchen nachgeordneten Patentansprüche als auch auf die nachfolgende Beschreibung eines bevorzugten Ausführungsbeispiels in Verbindung mit der Zeichnung. In der Zeichnung zeigt
- Fig. 1: ein Ausführungsbeispiel eines Systems und
- Fig. 2: einen Ablaufplan eines Ausführungsbeispiels eines Verfahrens.

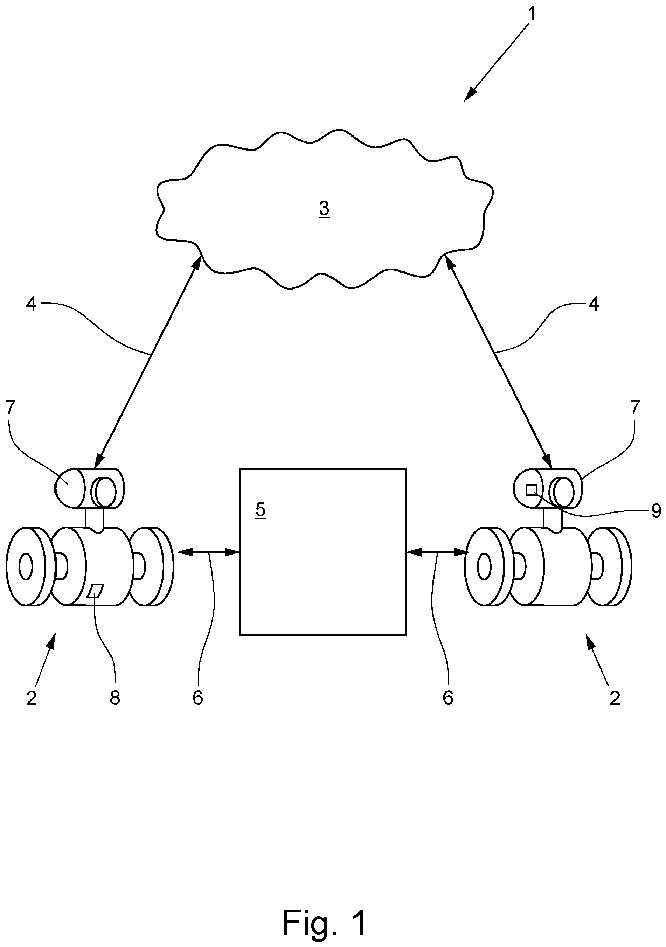

Fig. 1 zeigt ein Ausführungsbeispiel eines Systems 1 in einer industriellen Anlage mit zwei Feldgeräten 2, einem als Cloud ausgebildeten Computer 3, einem Kommunikationskanal 4, einer Anlagensteuerung 5 und einem Feldbus 6.

Die beiden Feldgeräte 2 automatisieren Prozesse in der industriellen Anlage. Sie weisen dazu Sensoren zur Messung und Aktoren zur Beeinflussung von Prozessgrößen auf.

Der Kommunikationskanal 4 ist zur Übertragung von Daten zwischen einerseits den beiden Feldgeräten 2 und andererseits dem Computer 3 ausgebildet. Dazu ist jedes der beiden Feldgeräte 2 über den Kommunikationskanal 4 mit dem Computer 3 verbunden.

Neben dem Kommunikationskanal 4 gibt es noch den Feldbus 6. Jedes der beiden Feldgeräte 2 ist über den Feldbus 6 mit der Anlagensteuerung 5 verbunden. Zum einen steuert die Anlagensteuerung 5 die beiden Feldgeräte 2 über den Feldbus 6 und zum anderen werden Daten über den Feldbus 6 zwischen den Feldgeräten 2 und der Anlagensteuerung 5 übertragen.

Jedes der beiden Feldgeräte 2 weist einen Feldgerätcomputer 7 zur Ausführung von neuronalen Netzen auf. Der Feldgerätcomputer 7 weist eine bestimmte Leistungsfähigkeit auf, weshalb er nur zur Ausführung von neuronalen Netzen bis zu einer Maximalkomplexität geeignet ist. Der Feldgerätcomputer 7 eines Feldgeräts 2 ist auch zur Steuerung des jeweiligen Feldgeräts 2, zur Kommunikation mit der Anlagensteuerung 5 und zur Kommunikation mit dem Computer 3 ausgebildet.

Weiter ist jedes der beiden Feldgeräte 2 ausgebildet, Feldgerätfehler zu erkennen und ausgelöst durch einen Feldgerätfehler, Daten über diesen zu erheben. Zur erweiterten Erkennung von Feldgerätfehlern weist das linke Feldgerät 2 einen Beschleunigungssensor 8 und das rechte Feldgerät 2 einen Temperatursensor 9 auf. Sowohl der Beschleunigungssensor 8 als auch der Temperatursensor 9 sind ausgebildet, Daten über Feldgerätfehler zu liefern. Die Daten eines Feldgerätfehlers umfassen Daten sowohl vor als auch nach dem Eintreten des Feldgerätfehlers. Weiter sind die beiden Feldgeräte 2 auch ausgebildet, Daten über Feldgerätnormalbetrieb zu liefern. Daten über Feldgerätnormalbetrieb umfassen insbesondere auch Messdaten, welche von den Feldgeräten 2 im Normalbetrieb anfallen.

Die beiden Feldgeräte 2 und der Computer 3 sind ausgebildet, die von den beiden Feldgeräte 2 erhobenen Daten über den Kommunikationskanal 4 von den beiden Feldgeräten 2 zum Computer 3 zu übertragen.

Der Computer 3 ist weiter ausgebildet, Trainingsdaten aus den Daten zu erzeugen, das neuronale Netz mit den Trainingsdaten zu trainieren, sodass es nach dem Training zur Vorhersage von Feldgerätfehlern ausgebildet ist, und die Anfangskomplexität zumindest bis auf die Maximalkomplexität zu reduzieren, indem in mindestens einem Reduktionsschritt zunächst mindestens ein Neuron aus dem neuronalen Netz entfernt und dann das reduzierte neuronale Netz erneut trainiert wird, sodass es nach dem Training zur Vorhersage von Feldgerätfehlern ausgebildet ist.

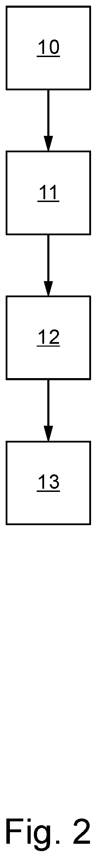

Im Betrieb führt der derart ausgebildete Computer 3 ein Verfahren mit den in Fig. 2 gezeigten Schritten durch:
In einem ersten Verfahrensschritt 10 wird ein Neuronen aufweisendes neuronales Netz zur Vorhersage von Feldgerätfehlern mit einer Anfangskomplexität größer als die Maximalkomplexität erzeugt.

In einem zweiten Verfahrensschritt 11 werden Trainingsdaten aus den zuvor von den Feldgeräten 2 zum Computer 3 übertragenen Daten erzeugt und die Trainingsdaten in Lerndaten und Testdaten aufgeteilt.

In einem dritten Verfahrensschritt 12 wird das neuronale Netz mit den Trainingsdaten trainiert, indem es mit den Lerndaten unterrichtet und mit den Testdaten getestet wird, sodass es nach dem Training zur Vorhersage von Feldgerätfehlern ausgebildet ist.

In einem vierten Verfahrensschritt 13 wird die Anfangskomplexität zumindest bis auf die Maximalkomplexität reduziert, indem in mindestens einem Reduktionsschritt zunächst mindestens ein Neuron aus dem neuronalen Netz entfernt und dann das reduzierte neuronale Netz erneut trainiert wird, sodass es zur Vorhersage von Feldgerätfehlern ausgebildet ist.

Die Beurteilung des Erfolgs des Trainings wird auf Grundlage der Ergebnisse des Tests mit den Testdaten ausgeführt. Wenn die Beurteilung durch den Computer 3 ergibt, dass das neuronale Netz zur Vorhersage von Feldgerätfehlern ausgebildet ist, wird das Training beendet. Wenn Sie jedoch ergibt, dass die Ausbildung des neuronalen Netzes noch nicht ausreichend ist, wird das Training entsprechend den Ergebnissen des Tests angepasst und fortgeführt.

Wenn die Komplexität des neuronalen Netzes nach dem Reduktionsschritt die Maximalkomplexität noch übersteigt, werden weitere Reduktionsschritte ausgeführt, bis die Komplexität die Maximalkomplexität nicht mehr übersteigt. Durch die Reduktion der Anfangskomplexität des neuronalen Netzes zumindest bis auf die Maximalkomplexität ist es nun von den Feldgerätcomputern 7 der Feldgeräte 2 ausführbar.

Die beiden Feldgeräte 2 und der Computer 3 sind ferner ausgebildet, das zum Vorhersagen von Feldgerätfehlern ausgebildete neuronale Netz vom Computer 3 über den Kommunikationskanal 4 zu jedem der beiden Feldgeräte 2 zu übertragen, sodass jedes der beiden Feldgeräte 2 das neuronale Netz ausführen kann.

Nach einer Übertragung des reduzierten neuronalen Netzes auf die Feldgerätcomputer 7 sind die Feldgeräte 2 ausgebildet, im Feldgerätnormalbetrieb Feldgerätfehler vor deren Eintreten vorherzusagen. Ein von einem der Feldgeräte 2 vorhergesagter Feldgerätfehler wird an die Anlagensteuerung 5 gemeldet. Die Anlagensteuerung 5 ist ausgebildet, Maßnahmen zu ergreifen oder zu veranlassen, die das Eintreten des Feldgerätfehlers oder jedenfalls eine Beeinträchtigung des Systems 1 durch den Feldgerätfehler verhindern oder zumindest abmildern.

### Bezugszeichen

- 1: System
- 2: Feldgerät
- 3: Computer
- 4: Kommunikationskanal
- 5: Anlagensteuerung
- 6: Feldbus
- 7: Feldgerätcomputer
- 8: Beschleunigungssensor
- 9: Temperatursensor
- 10: erster Verfahrensschritt
- 11: zweiter Verfahrensschritt
- 12: dritter Verfahrensschritt
- 13: vierter Verfahrensschritt

## Patentansprüche

1. System (1) mit einem Feldgerät (2), einem Computer (3) und einem Kommunikationskanal (4) zur Übertragung von Daten zwischen dem Feldgerät (2) und dem Computer (3),
- wobei das Feldgerät (2) und der Computer (3) zur Kommunikation miteinander ausgebildet und verbunden sind,
- wobei das Feldgerät (2) einen Feldgerätcomputer (7) zur Ausführung von neuronalen Netzen bis zu einer Maximalkomplexität und zumindest einen zusätzlichen Sensor (8, 9) zur Erkennung von Feldgerätfehlern aufweist,
- wobei das Feldgerät (2) ausgebildet ist, Daten über den Feldgerätnormalbetrieb zu erheben,
- wobei der zumindest eine zusätzliche Sensor (8, 9) ausgebildet ist, zu den Daten beizutragen,
- wobei der Computer (3) ausgebildet ist,
- Trainingsdaten aus Daten über Feldgerätfehler zu erzeugen,
- das neuronale Netz mit den Trainingsdaten zu trainieren, sodass es zur Vorhersage von Feldgerätfehlern ausgebildet ist, wobei das neuronale Netz mit einer Anfangskomplexität größer als die Maximalkomplexität erzeugt wird, und
- die Anfangskomplexität zumindest bis auf die Maximalkomplexität zu reduzieren, indem in mindestens einem Reduktionsschritt zunächst mindestens ein Neuron aus dem neuronalen Netz entfernt und dann das reduzierte neuronale Netz erneut trainiert wird, sodass es zur Vorhersage von Feldgerätfehlern ausgebildet ist.

2. System (1) nach Anspruch 1, wobei das Feldgerät (2) ausgebildet ist, mindestens einen Feldgerätfehler in diesem zu erkennen und ausgelöst durch diesen, Daten über den Feldgerätfehler zu erheben.

3. System (1) nach Anspruch 1 oder 2, wobei das Feldgerät (2) und der Computer (3) ausgebildet sind, die Daten über den Kommunikationskanal (4) vom Feldgerät (2) zum Computer (3) zu übertragen und/oder ausgebildet sind, das reduzierte neuronale Netz vom Computer (3) zum Feldgerät (2) zu übertragen.

4. System (1) nach einem der Ansprüche 1 bis 3, wobei das System (1) mindestens ein weiteres Feldgerät (2) aufweist, wobei das mindestens eine weitere Feldgerät (2) entsprechend dem Feldgerät (2) ausgebildet ist.

5. System (1) nach einem der Ansprüche 1 bis 4, wobei der Computer (3) als Cloud ausgebildet ist.

## Claims

1. System (1) comprising a field device (2), a computer (3) and a communication channel (4) for transmitting data between the field device (2) and the computer (3),
- wherein the field device (2) and the computer (3) are configured and connected to communicate with each other,
- wherein the field device (2) comprises a field device computer (7) for executing neural networks up to a maximum complexity and at least one additional sensor (8, 9) for detecting field device errors,
- wherein the field device (2) is designed to collect data over the field device normal operation,
- wherein the at least one additional sensor (8, 9) is designed to contribute to the data,
- wherein the computer (3) is designed
- to generate training data from data about field device errors
- to train the neural network with the training data so that it is configured to predict field device errors, wherein the neural network is generated with an initial complexity greater than the maximum complexity, and
- to reduce the initial complexity at least to the maximum complexity by first removing at least one neuron from the neural network in at least one reducing step and then retraining the reduced neural network so that it is configured to predict field device errors.

2. System (1) according to claim 1, wherein the field device (2) is designed to detect at least one field device error therein and, triggered by the field device error, to collect data about the field device error.

3. System (1) according to claim 1 or 2, wherein the field device (2) and the computer (3) are designed to transmit the data via the communication channel (4) from the field device (2) to the computer (3) and/or are designed to transmit the reduced neural network from the computer (3) to the field device (2).

4. System (1) according to any one of claims 1 to 3, wherein the system (1) comprises at least one further field device (2), wherein the at least one further field device (2) is designed according to the field device (2).

5. System (1) according to any one of claims 1 to 4, wherein the computer (3) is designed as a cloud.

## Revendications

1. Système (1) comprenant un appareil de terrain (2), un ordinateur (3) et un canal de communication (4) destiné à transmettre des données entre l'appareil de terrain (2) et l'ordinateur (3),
- l'appareil de terrain (2) et l'ordinateur (3) étant conçus et reliés entre eux afin de communiquer,
- l'appareil de terrain (2) comportant un ordinateur d'appareil de terrain (7) destiné à exécuter des réseaux neuronaux jusqu'à une complexité maximale et au moins un capteur supplémentaire (8, 9) destiné à détecter des erreurs de l'appareil de terrain,
- l'appareil de terrain (2) étant conçu pour collecter des données sur le fonctionnement normal de l'appareil de terrain,
- l'au moins un capteur supplémentaire (8, 9) étant conçu pour contribuer aux données,
- l'ordinateur (3) étant conçu,
- pour générer des données d'apprentissage à partir des données sur les erreurs d'appareil de terrain,
- pour effectuer l'apprentissage du réseau neuronal avec les données d'apprentissage de sorte qu'il soit conçu pour prédire des erreurs d'appareil de terrain, le réseau neuronal étant généré avec une complexité initiale supérieure à la complexité maximale, et
- pour réduire la complexité initiale au moins jusqu'à la complexité maximale en ce qu'au moins un neurone est d'abord supprimé du réseau neuronal au cours d'au moins une étape de réduction, puis le réseau neuronal réduit est de nouveau soumis à un apprentissage de sorte qu'il soit conçu pour prédire des erreurs d'appareil de terrain.

2. Système (1) selon la revendication 1, l'appareil de terrain (2) étant conçu pour détecter au moins une erreur d'appareil de terrain dans ledit appareil de terrain et, en étant déclenché par ladite erreur, pour collecter des données sur l'erreur d'appareil de terrain.

3. Système (1) selon la revendication 1 ou 2, l'appareil de terrain (2) et l'ordinateur (3) étant conçus pour transmettre les données sur le canal de communication (4) de l'appareil de terrain (2) à l'ordinateur (3) et/ou étant conçus pour transmettre le réseau neuronal réduit de l'ordinateur (3) à l'appareil de terrain (2).

4. Système (1) selon l'une des revendications 1 à 3, le système (1) comportant au moins un autre appareil de terrain (2), l'au moins un autre appareil de terrain (2) étant conçu de manière à correspondre à l'appareil de terrain (2).

5. Système (1) selon l'une des revendications 1 à 4, l'ordinateur (3) étant conçu sous la forme d'un Cloud.
